# EUROPÄISCHE PATENTANMELDUNG

(11) **EP 4 400 203 A1**
(43) Veröffentlichungstag der Anmeldung: **17.07.2024**
(21) Anmeldenummer: 24151628.5
(22) Anmeldetag: 12.01.2024
(51) Int. Cl.: B01D 65/00, B01D 65/02

(54) **MEMBRANVORRICHTUNG MIT BEEINFLUSSBARER STRÖMUNGSFÜHRUNG SOWIE ENTSPRECHENDES VERFAHREN**

(30) Priorität: 12.01.2023 DE 102023100582; 20.01.2023 DE 102023101425
(71) Anmelder: MionTec GmbH, 51377 Leverkusen (DE)
(72) Erfinder: Greisner, Bastian, 51375 Leverkusen (DE); Alt, Joachim, 51067 Köln (DE); Mauer, Dieter, 51375 Leverkusen (DE)
(74) Vertreter: Erbacher, Martin

(57) **Zusammenfassung**

Die Erfindung betrifft eine Membranvorrichtung mit beeinflussbarer Strömungsführung, mit einer Membraneinheit, welche eine semipermeable Membran sowie zumindest eine erste und zumindest eine zweite durch die semipermeable Membran voneinander separierte durchströmbare Kammern aufweist, wobei zumindest einer der ersten und/oder zweiten Kammer eine Leitungsanordnung zugeordnet ist, welche einen Eingang zum Speisen der jeweiligen Kammer mit einem Prozessfluid und einen Ausgang zum Abführen des Prozessfluids aus der jeweiligen Kammer aufweist, wobei die Leitungsanordnung eine Ventilgruppe aufweist, welche zum Einnehmen einer ersten Ventilschaltung eingerichtet ist, in welcher das Prozessfluid an einer ersten Seite der ersten oder der zweiten Kammer in die Membraneinheit eingeleitet wird, und zum Einnehmen einer zweiten Ventilschaltung eingerichtet ist, in welcher das Prozessfluid an einer von der ersten Seite abweichenden zweiten Seite der ersten oder der zweiten Kammer in die Membraneinheit eingeleitet wird. Die Erfindung betrifft ferner ein entsprechendes Verfahren.

## Beschreibung

Die Erfindung geht aus von einer Membranvorrichtung mit zumindest einer Membraneinheit, welche eine semipermeable Membran sowie zumindest eine erste und zumindest eine zweite durch die Membran voneinander separierte durchströmbare Kammern aufweist, wobei zumindest einer der ersten und/oder zweiten Kammer eine Leitungsanordnung zugeordnet ist, welche einen Eingang zum Speisen der jeweiligen Kammer mit einem Prozessfluid und einen Ausgang zum Abführen des Prozessfluids aus der jeweiligen Kammer aufweist. Die Erfindung betrifft ferner ein entsprechendes Verfahren.

Unter Membranverfahren versteht man Vorwärtsosmose, Umkehrosmose und deren Zwischenformen wie druck-retardierte Vorwärtsosmose oder osmotisch unterstützte Umkehrosmose, deren Triebkraft durch einen osmotisch-hydraulischen Druckgradienten erzeugt wird, Mikrofiltration, Ultrafiltration und Nanofiltration, deren treibendes Potential durch eine Druckdifferenz erzeugt wird, Pervoperation, Dampfpermeation und Gaspermeation, deren Triebkraft durch eine Partialdruckdifferenz erzeugt wird, Dialyse, Elektrodialyse oder bipolare Elektrodialyse, deren Triebkraft durch eine elektrische Potenzialdifferenz erzeugt wird und Dialyse und Diffusionsdialyse, deren Triebkraft durch eine Konzentrationsdifferenz erzeugt wird.

Ferner versteht man unter Membranverfahren sämtliche Verfahren, bei denen zwei Fluide mittels einer Membran in Kontakt gebracht werden.

Insbesondere löst die vorliegende Erfindung ein Problem der Vorwärtsosmose. Die Vorwärtsosmose ist ein Verfahren, dass mithilfe einer hochosmotischen Zuglösung beispielsweise Wasser aus einem weiteren Stoffstrom, dem Feed, entziehen kann, wodurch dieser entwässert und aufkonzentriert wird. Das Verfahren der Vorwärtsosmose gilt als vielversprechend und befindet sich zurzeit am Ende der Entwicklungsphase. Derzeit arbeiten viele Forscher und Entwickler daran, das Verfahren der Vorwärtsosmose in die Anwendungsphase zu bringen, damit es in der Industrie kommerziell genutzt werden kann.

Ein bestehendes Problem der Vorwärtsosmose und von Membranverfahren allgemein, ist es, dass die Membran während des Betriebs kontinuierlich mit Fouling-Verursachern, die in den Prozesslösungen enthalten sind, in Kontakt steht. Diese lagern sich an und in der Membran an und führen zu internen und externen Fouling. Besonders der anfängliche Bereich einer Membranstecke in einem Modul ist von Fouling betroffen, wohingegen der Endbereich der Membran von Scaling betroffen ist. Weiterhin können Feststoffe, die in den Prozesslösungen enthalten sind, am Membraneingang, insbesondere an der Stirnfläche von Hohlfasermembranen, die zum jetzigen Zeitpunkt die marktüblichen Membranen der Vorwärtsosmose darstellen, eine Deckschicht bilden, wodurch die nachfolgenden Kapillaren nicht mehr durchströmt und somit technisch unwirksam werden. Das Fouling sowie die Deckschichtbildung führen dazu, dass die Leistung der Membran stetig sinkt und die Standzeit somit reduziert wird.

Es ist bekannt, dass wiederkehrende Reinigungsroutinen einen Teil der Membranleistung wieder herstellen können. Durch den Einsatz von Chemikalien kann das reversible Fouling und die Deckschicht von der Membran entfernt werden. Eine weitere Methode ist das Spülen bei hohen Überströmgeschwindigkeiten, sodass die auftretenden mechanischen Kräfte die externe Foulingschichten abtragen. Diese Reinigungsroutinen erfordern ein Aussetzen des Produktionsbetriebes, wodurch die Anlagenverfügbarkeit und somit die Wirtschaftlichkeit des Verfahrens erheblich reduziert wird.

Es ist daher die Aufgabe der vorliegenden Erfindung, eine Vorrichtung bzw. ein Verfahren bereitzustellen, bei der die Membran einer Membranvorrichtung während des Produktionsbetriebes gereinigt werden kann, welche einen höheren Umweltschutz ermöglicht und geringerer Kosten bedarf.

Die Aufgabe wird gelöst mit den Merkmalen der unabhängigen Ansprüche. Vorteilhafte Ausgestaltungen sind jeweils in den abhängigen Ansprüchen angegeben.

Demgemäß ist vorgesehen, dass die Leitungsanordnung eine Ventilgruppe aufweist, welche zum Einnehmen einer ersten Ventilschaltung eingerichtet ist, in welcher das Prozessfluid an einer ersten Seite der ersten oder der zweiten Kammer in die Membraneinheit eingeleitet wird, und zum Einnehmen einer zweiten Ventilschaltung eingerichtet ist, in welcher das Prozessfluid an einer von der ersten Seite abweichenden zweiten Seite der ersten oder der zweiten Kammer in die Membraneinheit eingeleitet wird.

Die Membraneinheit kann zumindest zwei Kammern aufweisen, welche jeweils zwei Seiten aufweisen, so dass die Membraneinheit beispielsweise vier Seiten aufweisen kann, an welchen ein Prozessfluid in die Membraneinheit einströmen oder aus dieser herausströmen kann. Die Ventilgruppe kann eine Mehrzahl Ventile umfassen. Das Einleiten des Prozessfluids an unterschiedlichen Seiten kann das Einleiten an unterschiedlichen Seiten derselben Kammer umfassen. Dadurch kann die Durchflussrichtung der jeweiligen Kammer verändert werden. Das Einleiten des Prozessfluids an unterschiedlichen Seiten kann ferner das Einleiten an unterschiedlichen Kammern umfassen. Dadurch ist es möglich, die Funktionen der Kammern zu vertauschen. Beispielsweise kann bei der ersten Ventilschaltung die erste Kammer zum Durchleiten des Feeds und die zweite Kammer zum Durchleiten der Zuglösung dienen, nach Umschalten in die zweite Ventilschaltung kann dann die erste Kammer zum Durchleiten der Zuglösung und die zweite Kammer zum Durchleiten des Feeds dienen. Es kann eine Mehrzahl Leitungsanordnungen mit jeweiliger Ventilgruppe vorgesehen sein. Dadurch können die vorbeschriebenen Funktionen auch kombiniert werden, so dass in jeder der Kammern unabhängig voneinander die Durchflussrichtung umgeschaltet werden kann und darüber hinaus die Kammern von unterschiedlichen Prozesslösungen angeströmt werden können. Es versteht sich, dass die Membraneinheit auch durch mehreren in Serie, parallel oder in Kombination daraus betriebenen Modulen bestehen kann, welche innerhalb einer Kaskade/Modulverschaltung miteinander verbunden werden, um die gewünschte Membranfläche zu erzeugen. Ferner versteht sich, dass die semipermeable Membran auch durch eine Hohlfasermembran, eine Spiralwickelmembran oder eine Plattenmembran etc. gebildet sein kann, welche aufgrund ihrer Bauform eine Vielzahl von Kammern aufweisen können.

Die erfindungsgemäße Vorrichtung erlaubt es, dass im Laufe des Betriebes die Strömungsrichtung der Prozessströme unmittelbar und ohne, das Pumpen heruntergefahren werden müssen, geändert werden kann. Die volle Produktionsleistung bleibt somit bestehen. Die abrupte Umkehrung der Strömungsrichtung bewirkt, dass die Deckschicht am Eingang das Membranbündels nun durch die Prozesslösung, die aus dem Lumen der Kapillaren entstammt, abgetragen wird. Weiterhin führt der ständige Impuls des Umschaltens dazu, dass das externes Fouling der Membran reduziert wird und sich zu dem nicht nur auf den Anfang der Membranstrecke beschränkt, sondern gleichermaßen auf Anfang und Ende aufteilt.

Ein Vorteil der Erfindung besteht ferner in der verlängerten Standzeit, also Nutzungsdauer der Membran, bevor diese durch eine neue Membran ausgetauscht werden muss.

Ein weiterer Vorteil der Erfindung ist der verbesserte Umweltschutz, der sich zu einem durch den verringerten Membranverbrauch, als auch durch die Reduktion von Reinigungschemikalien ergibt. Die geringeren Materialkosten und die im Gegenzug dazu erhöhte Produktionszeit machen die Erfindung daher deutlich wirtschaftlicher.

Es kann vorgesehen sein, dass das Prozessfluid jeweils aus der der Einströmseite gegenüberliegenden Seite der jeweiligen Kammer aus der Membraneinheit herausströmt. Natürlich laufen über die semipermeable Membran während des Durchströmens die vorgesehenen Trennprozesse ab.

Es kann vorgesehen sein, das in der ersten Ventilschaltung die jeweilige Kammer in einer ersten Richtung durchströmt wird, und in der zweiten Ventilschaltung die jeweilige Kammer in einer zweiten, der ersten entgegengesetzten, Richtung durchströmt wird.

Ferner ist denkbar, dass die Ventilgruppe einen eingangs- bzw. ausgangsseitigen ersten Bereich der Leitungsanordnung, welcher eine konstante Durchflussrichtung aufweist, von einem Membraneinheit-seitigen zweiten Bereich der Leitungsanordnung separiert, welcher eine alternierende Durchflussrichtung aufweist.

Der Eingang kann über ein erstes Ventil der Ventilgruppe mit der ersten Seite der Kammer und über ein zweites Ventil mit der zweiten Seite der Kammer fluidisch verbunden werden. Der Ausgang kann über ein drittes Ventil der Ventilgruppe mit der ersten Seite der Kammer und über viertes Ventil mit der zweiten Seite der Kammer fluidisch verbunden werden.

Es kann vorgesehen sein, dass in der ersten Ventilschaltung das erste und das vierte Ventil der ersten Ventilgruppe geöffnet und das zweite und das dritte Ventil der ersten Ventilgruppe geschlossen sind und wobei in der zweiten Ventilschaltung das zweite und das dritte Ventil der ersten Ventilgruppe geöffnet und das erste und vierte Ventil der ersten Ventilgruppe geschlossen sind.

Ferner kann vorgesehen sein, dass in der ersten Ventilschaltung ein erstes Prozessfluid durch die erste Kammer und ein zweites Prozessfluid durch die zweite Kammer geleitet werden, und in der zweiten Ventilschaltung das erste Prozessfluid durch die zweite Kammer und das zweite Prozessfluid durch die erste Kammer geleitet werden.

Darüber hinaus ist denkbar, dass beide der Kammern zumindest einen Eingang und einen Ausgang aufweisen, wobei zumindest einer der ersten und/oder zweiten Kammer eine erste Leitungsanordnung mit einer ersten Ventilgruppe zugeordnet ist, bei welcher in der ersten Ventilschaltung die jeweilige Kammer in einer ersten Richtung durchströmt wird, und in der zweiten Ventilschaltung die jeweilige Kammer in einer zweiten, der ersten entgegengesetzten, Richtung durchströmt wird, und wobei der ersten und der zweiten Kammer eine zweite fluidisch mit den Eingängen und den Ausgängen verbundene Leitungsanordnung zugeordnet ist, welche eine zweite Ventilgruppe aufweist, bei welcher in der ersten Ventilschaltung die erste Kammer und in der zweiten Ventilschaltung die zweite Kammer durchströmt wird.

Dabei kann das erste Prozessfluid durch einen ersten Eingang und das zweite Prozessfluid durch einen zweiten Eingang der zweiten Leitungsanordnung in die zweite Leitungsanordnung eingeleitet werden. Außerdem kann das erste Prozessfluid durch einen ersten Ausgang und das zweite Prozessfluid durch einen zweiten Ausgang der zweiten Leitungsanordnung aus der zweiten Leitungsanordnung abgeführt werden.

Ferner kann der erste Eingang über ein erstes Ventil der zweiten Ventilgruppe fluidisch mit der zweiten Kammer und der zweite Eingang über ein viertes Ventil der zweiten Ventilgruppe fluidisch mit der ersten Kammer verbunden werden. Außerdem kann der erste Eingang über ein zweites Ventil der zweiten Ventilgruppe fluidisch mit der ersten Kammer und der zweite Eingang über ein drittes Ventil der zweiten Ventilgruppe fluidisch mit der zweiten Kammer verbunden werden.

Darüber hinaus kann der erste Ausgang über ein sechstes Ventil der zweiten Ventilgruppe fluidisch mit der ersten Kammer und der zweite Ausgang über ein siebtes Ventil der zweiten Ventilgruppe fluidisch mit der zweiten Kammer verbunden werden. Außerdem kann der erste Ausgang über ein achtes Ventil der zweiten Ventilgruppe fluidisch mit der zweiten Kammer und der zweite Ausgang über ein fünftes Ventil der zweiten Ventilgruppe fluidisch mit der ersten Kammer verbunden werden.

Es ist denkbar, dass bei der ersten Ventilschaltung der zweiten Ventilgruppe das zweite Ventil und das dritte Ventil geöffnet und das erste Ventil und das vierte Ventil geschlossen sind. Ferner ist denkbar, dass in der zweiten Ventilschaltung der zweiten Ventilgruppe das erste Ventil und das vierte Ventil geöffnet und das zweite Ventil und das dritte Ventil geschlossen sind.

Ferner kann in der ersten oder der zweiten Ventilschaltung der zweiten Ventilgruppe das sechste und das siebte Ventil geöffnet und das fünfte und das achte Ventil geschlossen sein. Alternativ können das sechste und das siebte Ventil geschlossen und das fünfte und das achte Ventil geöffnet sein.

Insbesondere kann vorgesehen sein, dass die erste Prozesslösung ein Feed und die zweite Prozesslösung eine Zuglösung ist. Dabei kann die Zuglösung aus der von dieser jeweils durchströmten Kammer als Permeat abgeführt und das Feed aus der von diesem jeweils durchströmten Kammer als Retentat abgeführt werden.

Ferner kann eine Ansteuereinrichtung zum Ansteuern der zumindest einen Ventilgruppe vorgesehen sein, welche jeweils zum, insbesondere gleichzeitigen, Schalten zwischen der ersten und der zweiten Ventilschaltung eingerichtet ist.

Die Erfindung betrifft ferner ein Verfahren zum Beeinflussen der Strömungsführung einer Membranvorrichtung, insbesondere zum Betreiben einer Membranvorrichtung nach einem der vorangehenden Ansprüche, aufweisend die Schritte:
Einleiten eines ersten Prozessfluids in eine erste Seite zumindest einer ersten Kammer einer zwei durch eine semipermeable Membran separierte durchströmbare Kammern aufweisende Membraneinheit über eine erste Leitungsanordnung, wobei eine erste Ventilgruppe der ersten Leitungsanordnung zunächst eine erste Ventilschaltung aufweist;
Umschalten der ersten Ventilgruppe von der ersten Ventilschaltung in eine zweite Ventilschaltung, wodurch das erste Prozessfluid an einer von der ersten Seite abweichenden zweiten Seite der ersten oder zumindest einer zweiten der Kammern in die Membraneinheit eingeleitet wird;
Herausleiten des ersten Prozessfluids aus der der jeweiligen Einströmseite gegenüberliegenden Seite der jeweiligen Kammer der Membraneinheit über die erste Leitungsanordnung.

Das Verfahren kann ferner die Schritte aufweisen:
Einleiten eines zweiten Prozessfluids in eine erste Seite der zweiten Kammer über eine zweite Leitungsanordnung, wobei eine zweite Ventilgruppe der zweiten Leitungsanordnung zunächst eine erste Ventilschaltung aufweist;
Umschalten der zweiten Ventilgruppe von der ersten Ventilschaltung in eine zweite Ventilschaltung, wodurch das zweite Prozessfluid an einer von der ersten Seite der zweiten Kammer abweichenden zweiten Seite der ersten oder der zweiten Kammer in die Membraneinheit eingeleitet wird.

Ferner kann das Verfahren die Schritte aufweisen:
Einleiten des ersten Prozessfluids in die erste Leitungsanordnung und des zweiten Prozessfluids in die zweite Leitungsanordnung über eine dritte Leitungsanordnung, wobei eine dritte Ventilgruppe der dritten Leitungsanordnung zunächst eine erste Ventilschaltung aufweist;
Umschalten der dritten Ventilgruppe von der ersten Ventilschaltung in eine zweite Ventilschaltung, wodurch das erste Prozessfluid statt in die erste Kammer in die zweite Kammer eingeleitet wird, und das zweite Prozessfluid statt in die zweite Kammer in die erste Kammer eingeleitet wird.

Weitere Einzelheiten der Erfindung werden anhand der nachstehenden Figuren erläutert. Dabei zeigt:
- Fig. 1: ein Schaltbild einer ersten Ausführungsform der Erfindung;
- Fig. 2: ein Schaltbild einer zweiten Ausführungsform der Erfindung;
- Fig. 3: ein Schaltbild einer dritten Ausführungsform der Erfindung.

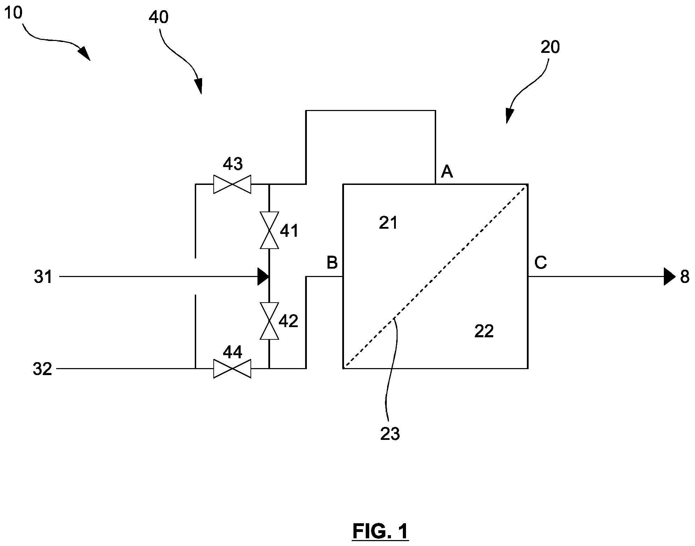

Fig. 1 zeigt eine erste Ausführungsform der erfindungsgemäßen Membranvorrichtung 10. Diese weist im Wesentlichen eine Membraneinheit 20 mit einer ersten und einer zweiten durchströmbaren Kammer 21, 22 auf, welche durch eine semipermeable Membran 23 separiert sind. Die erste Kammer weist einen ersten Ein-/Auslass A und einen zweiten Ein-/Auslass B auf, in der gezeigten Ausführungsform weist die zweite Kammer 22 einen Ein-/Auslass C auf. Der Membranvorrichtung 10 wird ein Feed zugeführt, das über einen Eingang 31 in die Ventilgruppe 40 der ersten Leitungsanordnung 30 geleitet wird. Dort wird es durch Ventil 41 oder Ventil 42, wobei nur eines von beiden geöffnet ist, zum entsprechenden Eingang A oder B einer ersten Kammer 21 der Membraneinheit 20 geführt, wobei Permeat 8 aus einer zweiten Kammer 22 abgeführt wird. Das Retentat wird nun, entsprechend der vorangegangen Ventilstellung, zu Ventil 44 und Ventil 42 oder Ventil 43 und 41 geleitet, wobei entsprechend der vorangegangen Ventilschaltung Ventil 43 oder Ventil 44 geöffnet ist und das Retentat über den Ausgang 32 ablaufen kann. Durch eine automatische Steuerung können nun zeitgleich die geschlossenen Ventile geöffnet und die offenen Ventile geschlossen werden, was eine Umkehrung der Strömungsrichtung bewirkt.

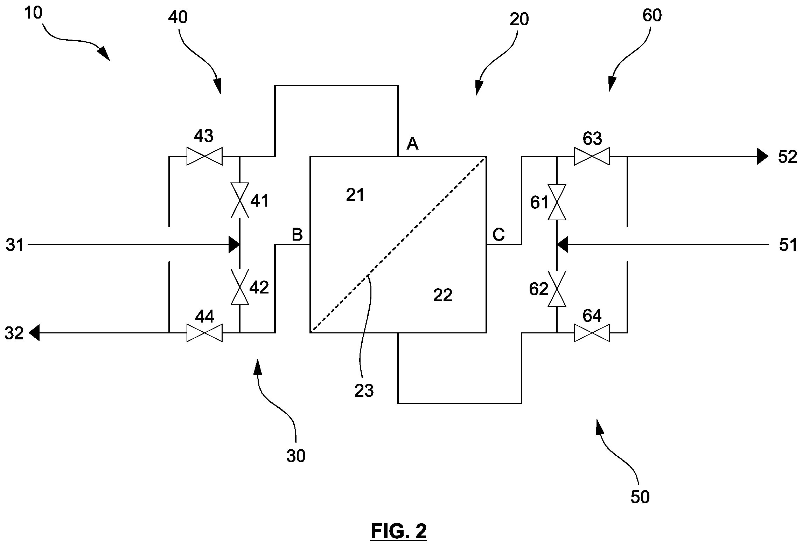

Fig. 2 zeigt eine zweite Ausführungsform der erfindungsgemäßen Membranvorrichtung 10. Diese weist im Gegensatz zur ersten Ausführungsform von Fig. 1 zwei Leitungsanordnungen 30, 50 mit jeweiligen Ventilgruppen 40, 60 auf, wobei die erste Leitungsanordnung 30 an die erste Kammer 21 der Membraneinheit 20 und die zweite Leitungsanordnung 50 an die zweite Kammer 22 der Membraneinheit 20 angeschlossen ist. Der Membranvorrichtung 10 wird ein Feed zugeführt, das über einen Eingang 31 in die Ventilgruppe 40 der ersten Leitungsanordnung 30 geleitet wird. Dort wird es durch Ventil 41 oder Ventil 42, wobei nur eines von beiden geöffnet ist, zum entsprechenden Eingang A oder B einer ersten Kammer 21 der Membraneinheit 20 geführt, wobei Permeat 8 aus einer zweiten Kammer 22 abgeführt wird. Das Retentat wird nun, entsprechend der vorangegangen Ventilstellung, zu Ventil 44 und Ventil 42 oder Ventil 43 und 41 geleitet, wobei entsprechend der vorangegangen Ventilschaltung Ventil 43 oder Ventil 44 geöffnet ist und das Retentat über den Ausgang 32 ablaufen kann. Durch eine automatische Steuerung können nun zeitgleich die geschlossenen Ventile geöffnet und die offenen Ventile geschlossen werden, was eine Umkehrung der Strömungsrichtung des Feeds bewirkt. Der Membranvorrichtung 10 wird ferner eine Zuglösung zugeführt, welche über den zweiten Eingang 51 der zweiten Leitungsanordnung 50 in die zweite Ventilgruppe 60 geleitet wird. Dort wird es durch Ventil 61 oder Ventil 62, wobei nur eines von beiden geöffnet ist, zum entsprechenden Eingang C oder D der Membraneinheit 20 geführt. Nach Durchlaufen der zweiten Kammer 22 wird die verdünnte Zuglösung nun, entsprechend der vorangegangen Ventilstellung, zu Ventil 61 und Ventil 63 oder Ventil 62 und 64 geleitet, wobei entsprechend der vorangegangen Ventilschaltung Ventil 63 oder Ventil 64 geöffnet ist und die verdünnte Zuglösung über den Ausgang 52 ablaufen kann. Durch eine automatische Steuerung können nun zeitgleich die geschlossenen Ventile geöffnet und die offenen Ventile geschlossen werden, was eine Umkehrung der Strömungsrichtung der Zuglösung bewirkt. Die Ventilgruppen von Feed und Zuglösung können zeitgleich und unabhängig voneinander umgeschaltet werden.

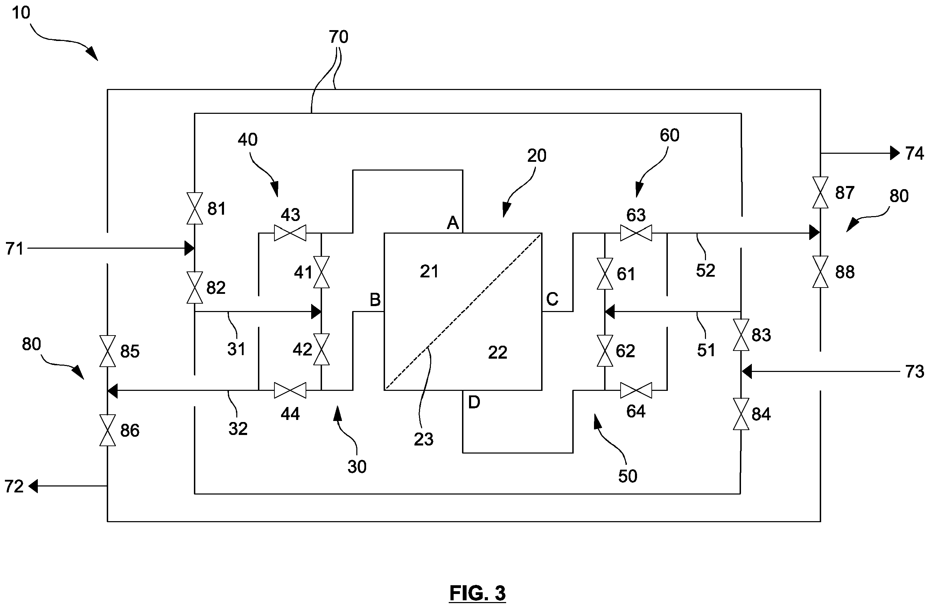

Fig. 3 zeigt eine dritte Ausführungsform der erfindungsgemäßen Membranvorrichtung 10, welche gegenüber der zweiten Ausführungsform aus Fig. 2 zusätzlich eine dritte Leitungsanordnung 70 mit einer dritten Ventilgruppe 80 aufweist, wobei die dritte Leitungsanordnung 70 mit den Eingängen 31, 51 und Ausgängen 32, 52 der ersten und zweiten Leitungsanordnung fluidisch verbunden ist. Der Membranvorrichtung 10 wird beispielsweise über den Eingang 71 ein Feed zugeführt, das in die dritte Ventilgruppe 80 geleitet wird. Dort wird es durch Ventil 81 oder Ventil 82, wobei nur eines von beiden geöffnet ist, zur entsprechenden Seite der Membraneinheit 20 geleitet, wodurch die Membranorientierung definiert wird. Dort wird es, je nach Membranorientierung, durch Ventil 41 oder Ventil 42, wobei nur eines von beiden geöffnet ist, oder durch Ventil 61 oder Ventil 62, wobei nur eines von beiden geöffnet ist, zum entsprechenden Eingang A, B, C, D der Membraneinheit 20 geführt. Das Retentat wird nun, entsprechend der vorangegangen Ventilstellung und je nach Membranorientierung, zu Ventil 42 und Ventil 44 oder Ventil 43 und Ventil 41, beziehungsweise zu Ventil 63 und Ventil 61 oder Ventil 64 und Ventil 62 geleitet, wobei entsprechend der vorangegangen Ventilschaltung Ventil 43 oder Ventil 44 beziehungsweise Ventil 63 oder Ventil 64 geöffnet ist und das Retentat je nach Membranorientierung durch Ventil 86 oder Ventil 88 über den Ausgang 72 ablaufen kann.

Weiterhin besteht die Ausführungsform aus einer Zuglösung, das beispielsweise über den Eingang 73 der dritten Leitungsanordnung 70 in die dritte Ventilgruppe 80 der Membranvorrichtung 10 geleitet wird. Dort wird es durch Ventil 83 oder Ventil 84, wobei nur eines von beiden geöffnet ist, zur entsprechenden Seite der Membraneinheit geleitet, wodurch die Membranorientierung definiert wird. Dort wird es, je nach Membranorientierung, durch Ventil 41 oder Ventil 42, wobei nur eines von beiden geöffnet ist, oder durch Ventil 61 oder Ventil 62, wobei nur eines von beiden geöffnet ist, zum entsprechenden Eingang A, B, C, D der Membraneinheit 20 geführt. Die verdünnte Zuglösung wird nun, entsprechend der vorangegangen Ventilstellung und je nach Membranorientierung, zu Ventil 42 und Ventil 44 oder Ventil 43 und Ventil 41, beziehungsweise zu Ventil 63 und Ventil 61 oder Ventil 64 und Ventil 62 geleitet, wobei entsprechend der vorangegangen Ventilschaltung Ventil 43 oder Ventil 44 beziehungsweise Ventil 63 oder Ventil 64 geöffnet ist und die verdünnte Zuglösung je nach Membranorientierung durch Ventil 86 oder Ventil 88 über den Ausgang 72 ablaufen kann. Durch eine automatische Steuerung können nun zeitgleich die geschlossenen Ventile geöffnet und die offenen Ventile geschlossen werden, was eine Umkehrung der Strömungsrichtung der Zuglösung bewirkt. Zusätzlich zur Ausführung in Fig. 2 kann durch eine automatische Steuerung nun zeitgleich die geschlossenen Ventile geöffnet und die offenen Ventile geschlossen werden, was neben einer Umkehrung der Strömungsrichtung für Feed-Lösung und Zuglösung auch zu einer Umkehrung der Membranorientierung führt.

Durch die alternierenden Strömungsrichtung der Massenströme sowie die alternierenden Permeationsrichtungen kann die Produktionszeit und Anlagenverfügbarkeit des Prozesses signifikant erhöht werden, wodurch die Wirtschaftlichkeit steigt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 8: Permeat
- 10: Membranvorrichtung
- 20: Membraneinheit
- 21: erste durchströmbare Kammer
- 22: zweite durchströmbare Kammer
- 23: semipermeable Membran
- 30: erste Leitungsanordnung
- 31: erster Eingang
- 32: erster Ausgang
- 40: erste Ventilgruppe
- 41: erstes Ventil
- 42: zweites Ventil
- 43: drittes Ventil
- 44: viertes Ventil
- 50: zweite Leitungsanordnung
- 51: zweiter Eingang
- 52: zweiter Ausgang
- 60: zweite Ventilgruppe
- 61: erstes Ventil
- 62: zweites Ventil
- 63: drittes Ventil
- 64: viertes Ventil
- 70: dritte Leitungsanordnung
- 71: dritter Eingang
- 72: dritter Ausgang
- 73: vierter Eingang
- 74: vierter Ausgang
- 80: dritte Ventilgruppe
- 81: erstes Ventil
- 82: zweites Ventil
- 83: drittes Ventil
- 84: viertes Ventil
- 85: fünftes Ventil
- 86: sechstes Ventil
- 87: siebtes Ventil
- 88: achtes Ventil
- A: erste Seite
- B: zweite Seite
- C: dritte Seite
- D: vierte Seite
- F: Feed
- Z: Zuglösung

## Patentansprüche

1. Membranvorrichtung (10) mit beeinflussbarer Strömungsführung,
mit zumindest einer Membraneinheit (20), welche eine semipermeable Membran (23) sowie zumindest eine erste und zumindest eine zweite durch die Membran voneinander separierte durchströmbare Kammern (21, 22) aufweist,
wobei zumindest einer der ersten und/oder zweiten Kammer (21, 22) eine Leitungsanordnung (30, 50, 70) zugeordnet ist, welche einen Eingang (31, 52, 71, 73) zum Speisen der jeweiligen Kammer (21, 22) mit einem Prozessfluid (F, Z) und einen Ausgang (32, 52, 72, 74) zum Abführen des Prozessfluids (F, Z) aus der jeweiligen Kammer (21, 22) aufweist,
wobei die Leitungsanordnung (30, 50, 70) eine Ventilgruppe (40, 60, 80) aufweist, welche zum Einnehmen einer ersten Ventilschaltung eingerichtet ist, in welcher das Prozessfluid (F, Z) an einer ersten Seite (A, B, C, D) der ersten oder der zweiten Kammer (21, 22) in die Membraneinheit (20) eingeleitet wird, und zum Einnehmen einer zweiten Ventilschaltung eingerichtet ist, in welcher das Prozessfluid (F, Z) an einer von der ersten Seite abweichenden zweiten Seite (A, B, C, D) der ersten oder der zweiten Kammer (21, 22) in die Membraneinheit (20) eingeleitet wird.

2. Membranvorrichtung (10) nach Anspruch 1, wobei das Prozessfluid (F, Z) jeweils aus der der Einströmseite (A, B, C, D) gegenüberliegenden Seite (A, B, C, D) der jeweiligen Kammer (21, 22) aus der Membraneinheit (20) herausströmt.

3. Membranvorrichtung (10) nach Anspruch 1 oder 2, wobei in der ersten Ventilschaltung die jeweilige Kammer (21, 22) in einer ersten Richtung durchströmt wird, und in der zweiten Ventilschaltung die jeweilige Kammer (21, 22) in einer zweiten, der ersten entgegengesetzten, Richtung durchströmt wird.

4. Membranvorrichtung (10) nach Anspruch 3, wobei die Ventilgruppe (40, 60) einen eingangs- bzw. ausgangsseitigen ersten Bereich der Leitungsanordnung (30, 50), welcher eine konstante Durchflussrichtung aufweist, von einem Membraneinheit-seitigen zweiten Bereich der Leitungsanordnung (30, 50) separiert, welcher eine alternierende Durchflussrichtung aufweist.

5. Membranvorrichtung (10) nach Anspruch 3 oder 4, wobei der Eingang (31, 51) über ein erstes Ventil (41, 42, 61, 62) der Ventilgruppe (40, 60) mit der ersten Seite (A, B, C, D) der Kammer (21, 22) und über ein zweites Ventil (41, 42, 61, 62) mit der zweiten Seite (A, B, C, D) der Kammer (21, 22) fluidisch verbindbar ist.

6. Membranvorrichtung (10) nach einem der Ansprüche 3 bis 5, wobei der Ausgang (32, 52) über ein drittes Ventil (43, 44, 63, 64) der Ventilgruppe mit der ersten Seite (A, B, C, D) der Kammer (21, 22) und über viertes Ventil (43, 44, 63, 64) mit der zweiten Seite (A, B, C, D) der Kammer (21, 22) fluidisch verbindbar ist.

7. Membranvorrichtung (10) nach Anspruch 6, wobei in der ersten Ventilschaltung das erste (41, 42, 61, 62) und das vierte Ventil (43, 44, 63, 64) geöffnet und das zweite (41, 42, 61, 62) und das dritte Ventil (43, 44, 63, 64) geschlossen sind und wobei in der zweiten Ventilschaltung das zweite (41, 42, 61, 62) und das dritte Ventil (43, 44, 63, 64) geöffnet und das erste (41, 42, 61, 62) und vierte Ventil (43, 44, 63, 64) geschlossen sind.

8. Membranvorrichtung (10) nach Anspruch 1 oder 2, wobei in der ersten Ventilschaltung ein erstes Prozessfluid (F) durch die erste Kammer (21) und ein zweites Prozessfluid (Z) durch die zweite Kammer (22) geleitet wird, und in der zweiten Ventilschaltung das erste Prozessfluid (F) durch die zweite Kammer (22) und das zweite Prozessfluid (Z) durch die erste Kammer (21) geleitet wird.

9. Membranvorrichtung (10) nach einem der Ansprüche 3 bis 7, wobei beide der Kammern zumindest einen Eingang (31, 51) und einen Ausgang (32, 52) aufweisen, wobei zumindest einer der ersten und/oder zweiten Kammer (21, 22) eine erste Leitungsanordnung (30, 50) mit einer ersten Ventilgruppe (40) zugeordnet ist, bei welcher in der ersten Ventilschaltung die jeweilige Kammer (21, 22) in einer ersten Richtung durchströmt wird, und in der zweiten Ventilschaltung die jeweilige Kammer (21, 22) in einer zweiten, der ersten entgegengesetzten, Richtung durchströmt wird, und wobei der ersten und der zweiten Kammer (21, 22) eine zweite fluidisch mit den Eingängen (31, 51) und den Ausgängen (32, 52) verbundene Leitungsanordnung (70) zugeordnet ist, welche eine zweite Ventilgruppe (80) aufweist, bei welcher in der ersten Ventilschaltung die erste Kammer (21, 22) und in der zweiten Ventilschaltung die zweite Kammer (21, 22) durchströmt wird.

10. Membranvorrichtung (10) nach Anspruch 8 oder 9, wobei das erste Prozessfluid (F) durch einen ersten Eingang (71, 73) und das zweite Prozessfluid (Z) durch einen zweiten Eingang (71, 73) der zweiten Leitungsanordnung (70) in die zweite Leitungsanordnung (70) eingeleitet wird, und das erste Prozessfluid (F) durch einen ersten Ausgang (72, 74) und das zweite Prozessfluid (Z) durch einen zweiten Ausgang (72, 74) der zweiten Leitungsanordnung (70) aus der zweiten Leitungsanordnung (70) abgeführt wird.

11. Membranvorrichtung (10) nach Anspruch 10, wobei der erste Eingang (71) über ein erstes Ventil (81) der zweiten Ventilgruppe (80) fluidisch mit der zweiten Kammer (22) und der zweite Eingang (73) über ein viertes Ventil (84) der zweiten Ventilgruppe (80) fluidisch mit der ersten Kammer (21) verbindbar ist, und der erste Eingang (71) über ein zweites Ventil (82) der zweiten Ventilgruppe (80) fluidisch mit der ersten Kammer (21) und der zweite Eingang (73) über ein drittes Ventil (84) der zweiten Ventilgruppe (80) fluidisch mit der zweiten Kammer (22) verbindbar ist.

12. Membranvorrichtung (10) nach einem der Ansprüche 10 oder 11, wobei der erste Ausgang (72) über ein sechstes Ventil (86) der zweiten Ventilgruppe (80) fluidisch mit der ersten Kammer (21) und der zweite Ausgang (74) über ein siebtes Ventil (87) der zweiten Ventilgruppe (80) fluidisch mit der zweiten Kammer (22) verbindbar ist, und der erste Ausgang (72) über ein achtes Ventil (88) der zweiten Ventilgruppe (80) fluidisch mit der zweiten Kammer (22) und der zweite Ausgang (74) über ein fünftes Ventil (85) der zweiten Ventilgruppe (80) fluidisch mit der ersten Kammer (21) verbindbar ist.

13. Membranvorrichtung (10) nach Anspruch 12, wobei in der ersten Ventilschaltung der zweiten Ventilgruppe (80) das zweite Ventil (82) und das dritte Ventil (83) geöffnet und das erste Ventil (81) und das vierte Ventil (84) geschlossen sind, und in der zweiten Ventilschaltung der zweiten Ventilgruppe (80) das erste Ventil (81) und das vierte Ventil (84) geöffnet und das zweite Ventil (82) und das dritte Ventil (83) geschlossen sind.

14. Membranvorrichtung (10) nach Anspruch 12 oder 13, wobei in der ersten oder der zweiten Ventilschaltung der zweiten Ventilgruppe (80) das sechste und das siebte Ventil (86, 87) geöffnet und das fünfte und das achte Ventil (85, 88) geschlossen sind, oder das sechste und das siebte Ventil (86, 87) geschlossen und das fünfte und das achte Ventil (85, 88) geöffnet sind.

15. Membranvorrichtung (10) nach einem der vorangehenden Ansprüche, wobei die erste Prozesslösung (F) ein Feed und die zweite Prozesslösung (Z) eine Zuglösung ist.

16. Membranvorrichtung (10) nach Anspruch 15, wobei die Zuglösung (Z) aus der von dieser jeweils durchströmten Kammer (21, 22) als Permeat abgeführt und das Feed (F) aus der von diesem jeweils durchströmten Kammer (21, 22) als Retentat abgeführt werden.

17. Membranvorrichtung (10) nach einem der vorangehenden Ansprüche, welche ferner eine Ansteuereinrichtung zum Ansteuern der zumindest einen Ventilgruppe aufweist, welche jeweils zum, insbesondere gleichzeitigen, Schalten zwischen der ersten und der zweiten Ventilschaltung eingerichtet ist.

18. Verfahren zum Beeinflussen der Strömungsführung einer Membranvorrichtung (10), insbesondere zum Betreiben einer Membranvorrichtung (10) nach einem der vorangehenden Ansprüche, aufweisend die Schritte:
Einleiten eines ersten Prozessfluids (F, Z) in eine erste Seite (A, B, C, D) zumindest einer ersten Kammer (21, 22) einer zwei durch eine semipermeable Membran (23) separierte durchströmbare Kammern (21, 22) aufweisende Membraneinheit (20) über eine erste Leitungsanordnung (30, 50, 70), wobei eine erste Ventilgruppe (40, 60, 80) der ersten Leitungsanordnung (30, 50, 70) zunächst eine erste Ventilschaltung aufweist;
Umschalten der ersten Ventilgruppe (40, 60, 80) von der ersten Ventilschaltung in eine zweite Ventilschaltung, wodurch das erste Prozessfluid (F, Z) an einer von der ersten Seite abweichenden zweiten Seite (A, B, C, D) der ersten oder zumindest einer zweiten der Kammern (21, 22) in die Membraneinheit (20) eingeleitet wird;
Herausleiten des ersten Prozessfluids (F, Z) aus der der jeweiligen Einströmseite (A, B, C, D) gegenüberliegenden Seite (A, B, C, D) der jeweiligen Kammer (21, 22) der Membraneinheit (20) über die erste Leitungsanordnung (30, 50, 70).

19. Verfahren nach Anspruch 18, ferner aufweisend die Schrite:
Einleiten eines zweiten Prozessfluids (F, Z) in eine erste Seite (A, B, C, D) der zweiten Kammer (21, 22) über eine zweite Leitungsanordnung (30, 50, 70), wobei eine zweite Ventilgruppe (40, 60, 80) der zweiten Leitungsanordnung (30, 50, 70) zunächst eine erste Ventilschaltung aufweist;
Umschalten der zweiten Ventilgruppe (40, 60, 80) von der ersten Ventilschaltung in eine zweite Ventilschaltung, wodurch das zweite Prozessfluid (F, Z) an einer von der ersten Seite der zweiten Kammer (21, 22) abweichenden zweiten Seite (A, B, C, D) der ersten oder der zweiten Kammer (21, 22) in die Membraneinheit (20) eingeleitet wird.

20. Verfahren nach Anspruch 19, ferner aufweisend die Schritte:
Einleiten des ersten Prozessfluids in die erste Leitungsanordnung und des zweiten Prozessfluids in die zweite Leitungsanordnung über eine dritte Leitungsanordnung, wobei eine dritte Ventilgruppe (80) der dritten Leitungsanordnung (70) zunächst eine erste Ventilschaltung aufweist;
Umschalten der dritten Ventilgruppe (80) von der ersten Ventilschaltung in eine zweite Ventilschaltung, wodurch das erste Prozessfluid (F, Z) statt in die erste Kammer (21, 22) in die zweite Kammer (21, 22) eingeleitet wird, und das zweite Prozessfluid (F, Z) statt in die zweite Kammer (21, 22) in die erste Kammer (21, 22) eingeleitet wird.
